# EUROPEAN PATENT APPLICATION

(11) **EP 2 618 172 A1**
(43) Date of publication of application: **24.07.2013**
(21) Application number: 13164086.4
(22) Date of filing: 23.04.2009
(51) Int. Cl.: G01S 1/00, G01S 5/00, G01S 19/24, G01S 19/34, G01S 19/14, H04N 1/00, H04N 1/21, H04N 101/00

(54) **Triggered Satellite Positioning**

(30) Priority: 25.04.2008 GB 0807554
(62) Divisional of application: 09734646.4
(71) Applicant: U-blox AG, 8800 Thalwil (CH)
(72) Inventor: Peeters, Johan, Reigate, Surrey RH2 9QQ (GB); Streng, Johannes Hermannus, Reigate, Surrey RH2 9QQ (GB); Yule, Andrew Thomas, Reigate, Surrey RH2 9QQ (GB)
(74) Representative: O'Callaghan, Robert James

(57) **Abstract**

A method of recording signals from a satellite positioning system. The method comprises recording, in response to a trigger signal, a block of data samples of a satellite broadcast, wherein at least one parameter of the recording depends on one or more parameters of the trigger signal. The source of the trigger signal is a camera and the parameters of the trigger signal comprise at least one of: information identifying whether a flash has been fired; an aperture value; a focal length value; a zoom value; a light-level value; an exposure time; a subject distance; information identifying orientation; and information identifying scene type.

## Description

This invention relates to methods of processing signals in a satellite positioning system, such as the Global Positioning System (GPS). In particular, it relates to systems in which satellite broadcasts are recorded for offline processing to determine position.

The global positioning system is a satellite-based navigation system consisting of a network of up to 32 orbiting satellites (called space vehicles, "SV") that are in six different orbital planes. 24 satellites are required by the system design, but more satellites provide improved coverage. The satellites are constantly moving, making two complete orbits around the Earth in just less than 24 hours.

The GPS signals transmitted by the satellites are of a form commonly known as Direct Sequence Spread Spectrum employing a pseudo-random code which is repeated continuously in a regular manner. The satellites broadcast several signals with different spreading codes including the Coarse / Acquisition or C/A code, which is freely available to the public, and the restricted Precise code, or P-code, usually reserved for military applications. The C/A code is a 1,023 bit long pseudo-random code broadcast with a chipping rate of 1.023 MHz, repeating every millisecond. Each satellite sends a distinct C/A code, which allows it to be uniquely identified.

A data message is modulated on top of the C/A code by each satellite and contains important information such as detailed orbital parameters of the transmitting satellite (called ephemeris), information on errors in the satellite's clock, status of the satellite (healthy or unhealthy), current date, and time. This part of the signal is essential to a GPS receiver determining an accurate position. Each satellite only transmits ephemeris and detailed clock correction parameters for itself and therefore an unaided GPS receiver must process the appropriate parts of the data message of each satellite it wants to use in a position calculation.

The data message also contains the so called almanac, which comprises less accurate information about all the other satellites and is updated less frequently. The almanac data allows a GPS receiver to estimate where each GPS satellite should be at any time throughout the day so that the receiver can choose which satellites to search for more efficiently. Each satellite transmits almanac data showing the orbital information for every satellite in the system.

A conventional GPS receiver reads the transmitted data message and saves the ephemeris, almanac and other data for continual use. This information can also be used to set (or correct) the clock within the GPS receiver.

To determine position, a GPS receiver compares the time a signal was transmitted by a satellite with the time it was received by the GPS receiver. The time difference tells the GPS receiver how far away that particular satellite is. By combining distance measurements from multiple satellites, position can be obtained by trilateration. With a minimum of three satellites, a GPS receiver can determine a latitude/longitude position (a 2D position fix). With four or more satellites, a GPS receiver can determine a 3D position which includes latitude, longitude, and altitude. The information received from the satellites can also be used to set (or correct) the clock within the GPS receiver.

By processing the apparent Doppler shifts of the signals from the satellites, a GPS receiver can also accurately provide speed and direction of travel (referred to as 'ground speed' and 'ground track').

Nearly all current GPS receivers work by processing signals from the satellites in "real time", as they come in, reporting the position of the device at the current time. Such "conventional" GPS receivers invariably comprise:
- an antenna suitable for receiving the GPS signals,
- analogue RF circuitry (often called a GPS front end) designed to amplify, filter, and mix down to an intermediate frequency (IF) the desired signals so they can be passed through an appropriate analogue-to-digital (A/D) convertor at a sample rate normally of the order of a few MHz,
- digital signal processing hardware that carries out the correlation process on the IF data samples generated by the A/D converter, normally combined with some form of micro controller that carries out the "higher level" processing necessary to control the signal processing hardware and calculate the desired position fixes.

The less well known concept of "Store and Process Later" (also known as "Capture and Process") has also been investigated. This involves storing the IF data samples collected by a conventional antenna and analogue RF circuitry in some form of memory before processing them at some later time (seconds, minutes, hours or even days) and often at some other location, where processing resources are greater.

The key advantages of the Capture and Process approach over conventional GPS receivers are that the cost and power consumption of the capturing device are kept to a minimum as no digital signal processing needs be done at the time of capture, and the grabs can be very short (e.g. 100ms). If the subsequent signal processing is done when the relevant satellite data (ephemeris etc) can be obtained via some other method, this approach also removes the need to decode the (very slow) data message from the SVs in the capturing device, which in many cases leads to unacceptably long times to start up conventional devices.

According to an aspect of the current invention, there is provided a method of recording signals from a satellite positioning system, according to claim 1.

Capture and Process Satellite positioning is useful in a wide variety of applications. The best way to process or use recorded data samples may vary from one application to another. Therefore, if the purpose of a particular grab (block) is known, this can provide clues as to how best to process the data. By using information about a trigger or request for causing a block of data samples to be captured, the capture and, optionally, processing of the data samples can be optimized for the particular application in question.

In one implementation of the invention, the processing can comprise processing a block of data samples of a satellite broadcast, using a processing method dependent on the one or more parameters, to derive at least position information.

The one or more recorded parameters of the first trigger signal may comprise at least one of: information identifying a source device of the trigger; and parameters of the source device of the trigger.

In the case where the trigger signal was a request from some associated piece of hardware, knowledge of that device and its purpose provide a useful context from which to make inferences about the most appropriate way of processing the data samples.

The source device may be a camera and the parameters of the source device may comprise at least one of: information identifying whether a flash has been fired; an aperture value; a focal length value; a zoom value; a light-level value; an exposure time; a subject distance; information identifying orientation; and information identifying scene type.

The fact that the source device is a camera may indicate that the desired application is geo-tagging of images. In this case, the goal will usually be to calculate, using the stored block of data samples, a position fix corresponding to the location where a given photograph was taken. Knowledge of the camera parameters at the time the photo was taken can be used to infer information about the circumstances in which it was captured, which may in turn mandate a particular approach to estimating the position.

The source device may comprise at least one of: a motion sensor; an acceleration sensor; and an orientation sensor.

The one or more parameters of the first trigger signal may comprise at least one of: a date/time of the trigger; a distance measurement; a compass direction; an acceleration measurement; an altitude measurement; a number of footsteps; and a number of revolutions of a wheel.

Sensed information about the physical circumstances associated with the recording of a block of data samples can offer useful indicators about either the intended application of the derived position information or the optimal means of computing it.

The method may further comprise processing the recorded block using one or more recorded parameters of a second trigger signal, to derive additional information.

Just as information about a trigger associated with the capture of a block can provide useful indicators as to the appropriate processing method, information gleaned from other triggers (for example, triggers shortly before or after the block of interest) can augment the understanding of the context still further.

Advantageously, the processing of the recorded block may comprise launching a software application in dependence upon the recorded parameters of the first trigger signal.

The most relevant program can be chosen according to the semantic significance of the grab. This enables efficient processing, without additional input from the user and ensures that all information is exploited fully.

Advantageously, the processing of the recorded block may comprise using the recorded parameters of the first trigger signal to simplify the derivation of the position information.

Various inferences are possible based on knowledge of details of the trigger signal. For example, if a rough estimate of time or position can be deduced, then processing of the satellite signal samples can be made substantially more efficient.

In an embodiment of the claimed invention, the processing comprises recording, in response to the trigger signal, a block of data samples of a satellite broadcast, at least one parameter of the recording depending on the one or more parameters of the trigger signal.

Having immediate knowledge of the details of the trigger signal can allow the capture parameters to be optimized for the circumstances. For example, some applications may demand a greater degree of robustness, while others may indicate that the capture conditions are likely to be favourable.

The method can further comprise providing the recorded blocks of data samples to a processor to derive at least position information.

The at least one first parameter of the recording may be a number of data samples recorded.

In this way, the length of the grab can be optimized, for example, for the expected environmental conditions according to the type of trigger. Keeping grab-length to a minimum reduces both power consumption and storage overhead in the receiver. At the same time, the user need only wait the minimum amount of time for the capture to complete. Short grabs may also reduce the later processing burden when a position fix is calculated from the samples.

The at least one second parameter of the trigger signal may comprise at least one of: information identifying a source device of the trigger; and parameters of the source device of the trigger.

In the case where the trigger signal was a request from some associated piece of hardware, knowledge of that device and its purpose provide a useful context from which to make inferences about the most appropriate way of recording the data samples.

The source device may be a camera and the parameters of the source device may comprise at least one of: information identifying whether a flash has been fired; an aperture value; a focal length value; a zoom value; a light-level value; an exposure time; a subject distance; information identifying orientation; and information identifying scene type.

Knowledge of the camera parameters at the time the photo is taken can be used to infer information about the circumstances in which it is being captured, which may in turn mandate a particular set of optimal recording parameters.

The source device may comprise at least one of: a motion sensor; an acceleration sensor; and an orientation sensor.

The at least one second parameter of the trigger signal may comprise at least one of: a date/time of the trigger; a distance measurement; an acceleration measurement; a number of footsteps; and a number of revolutions of a wheel.

Sensed information about the physical circumstances associated with the recording of a block of data samples can offer useful indications about how to do so optimally.

The method may further comprise: recording parameters of the trigger signal; and providing the recorded parameters to the processing system.

Thus, the parameters of the trigger may be used both on-line, in determining how best to capture the block, and off-line, in determining how best to process it.

According to another aspect of the invention, there is provided apparatus for recording signals from a satellite positioning system, according to claim 10.

Optionally, the apparatus may comprise processing means, which can be a processor, adapted to process a block of data samples of a satellite broadcast, using a processing method dependent on the one or more parameters, to derive at least position information.

In an embodiment of the claimed invention, the apparatus comprises recording means adapted to record, in response to the trigger signal, a block of data samples of a satellite broadcast, at least one parameter of the recording depending on the one or more parameters of the trigger signal.

Thus, the method and apparatus of the invention can use the trigger information to control how the data capture takes place and, optionally, how the captured data is processed.

The invention will now be described by way of example with reference to the accompanying drawings, in which:
Figure 1 shows a GPS receiver according to an embodiment of the invention;
Figure 2 shows a triggered Capture and Process data recording method according to an embodiment; and
Figure 3 shows a triggered Capture and Process data processing method according to an embodiment.

The invention provides methods of processing stored satellite positioning system data, such as GPS data. These methods can be used in many Capture and Process applications, where it is desirable for the receiver to have the GPS signal processing capability removed, and for this to be implemented remotely.

In a typical application, a small capture device which stores short blocks (termed "grabs" in the following description) of IF data samples into memory can subsequently upload its IF data grabs to a shared central computer which would not only carry out the necessary signal processing (correlation etc), but would also have access to a database of recent satellite information (ephemeris, etc) by being connected to one or more conventional GPS receivers which relayed key parts of the GPS data message they received to the central computer.

In particular, the invention supports Capture and Process applications in which the receiver either includes a trigger mechanism for triggering the capture in response to some stimulus, or is adapted to receive similar trigger signals from other devices, via a communication interface. Since such a receiver only captures IF data samples when requested to do so by the trigger, it does not waste time, energy and storage space capturing and storing unnecessary grabs. The power consumption and use of storage resources are therefore optimized compared to a device which continually captures periodic grabs. The Capture and Process approach is already energy efficient in the sense that there is no need to power complex signal processing hardware; with triggered grabs, battery life can be extended still further. Furthermore, a trigger brings the guarantee that a grab corresponds exactly with the location of the event triggering it, in contrast with the alternative of "blind" (non-triggered) periodic grabs.

However, the availability of a trigger is not only useful for reducing the number of grabs. Information contained (explicitly or implicitly) in the trigger can be used to guide the recording and/or the later processing of the triggered grabs.

A first aspect of the invention will now be described, in which parameters of the trigger are used to optimize the recording of each grab at the receiver.

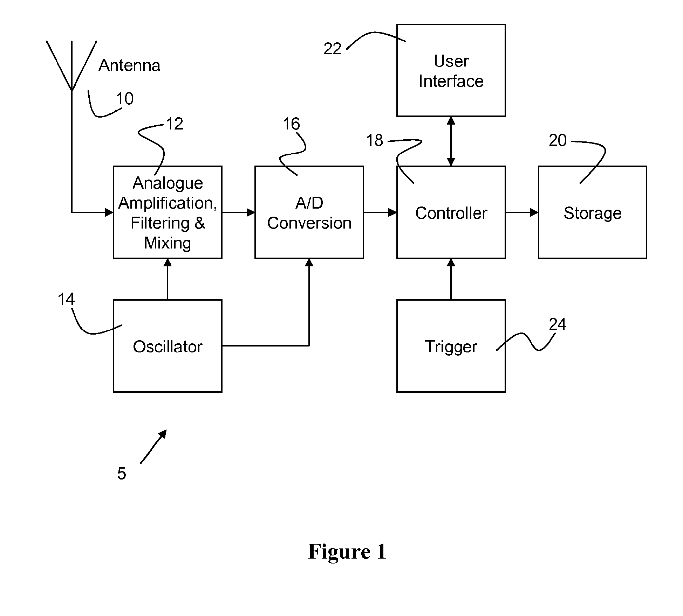

Figure 1 is a system diagram of a Capture and Process GPS receiver 5 which is adapted to implement a method according to the invention. The signals from the GPS satellites are received by the antenna 10 and then put through conventional analogue processing, typically comprising a combination of amplification, filtering and down mixing in unit 12 driven by a reference oscillator 14 (normally a temperature compensated crystal), followed by A/D conversion in unit 16. This is the conventional radio receiver electronics forming the RF front end.

A controller 18, implemented as discrete logic or a micro processor with associated firmware, controls the capture of the sampled IF data generated by the RF front end which is then stored in the storage device 20, for example a flash RAM, hard disc etc. The manner in which it does this is influenced by settings from the user (as input by the GUI 22) and by the trigger 24. The trigger 24 may be an internal trigger as shown, or may respond to a signal received from an external device (not shown).

Preferably, the controller keeps the RF front end, A/D converter and storage device in a low-power standby state, ready to capture digitized samples on command from the trigger.

When triggered, the device records a short block of IF data from the RF front end. A default grab may be, for example, 100ms long. However, information contained in the trigger for a particular grab may cause the controller 18 to capture a longer or a shorter grab. The exact values used could be further adjusted by the user via the GUI 22. In different applications, different length grabs will be appropriate. Hence, by using the trigger not only to cause the grab, but also to implicitly modulate the grab length, the receiver can adapt to varying conditions and requirements. Typically, each grab will be shorter than the subframe duration of 6s, and preferably less than 500ms.

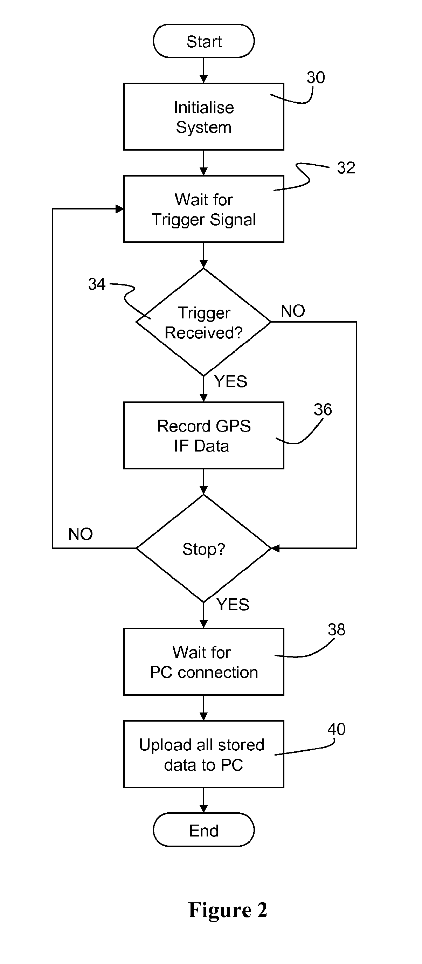

The logic implemented by the controller is explained with reference to Figure 2. The "Initialise system" step 30 includes selecting how long a default grab should be. The controller then enters a loop in which it waits for a short time for a trigger signal (step 32). If no trigger is received, the controller checks whether the user has instructed the data recording to stop. Alternatively, if a trigger is received, the GPS IF data of one grab is stored in step 36, with parameters chosen according to the trigger. The controller then returns to its loop of checking for triggers and stop instructions. Once recording has finished, step 38 monitors if data can be downloaded, and step 40 relates to the uploading of the recorded grabs to a PC for subsequent processing. The triggering of a grab at steps 34 and 36 may be synchronous, but is preferably asynchronous, such that the grab is captured immediately upon receipt, without any additional delay.

The method may be useful in a variety of applications. In a digital photography application, for example, the taking of a photo or the recording of a movie clip may trigger a Capture and Process GPS receiver to capture an IF grab. The receiver may be integral to the camera, or may be provided as an external accessory. In the latter case, the receiver is connected to the camera by a communication link, which allows the trigger signal to be passed from camera to receiver. A standard camera hot-shoe (of the kind often used to connect and synchronise an external flash unit with a camera) could be used for this purpose. Note that although, as a general rule, close synchronisation between the trigger and the capture of the IF grab will be desirable, it may be advantageous in some circumstances to interleave or offset slightly the tasks of taking the photo and capturing the grab. For example, to minimise interference with the satellite signals, the grab may be recorded before or after the flash is fired, rather than concurrently - since the impulse noise created by the electrical discharge of the flash may otherwise corrupt the received IF data samples.

The GPS receiver captures data samples according to information provided by the camera upon triggering. For example, if the camera notifies the receiver that a flash has been fired and the distance to the subject (as measured by an auto-focus system) is small, the receiver can infer an increased likelihood that the photograph is being taken indoors. It is generally more difficult to achieve reliable satellite positioning indoors, since building materials attenuate the radio signals from the satellites. In this case, the receiver may increase the length of the grab triggered, to provide increased robustness to the anticipated poor signal conditions.

One of the disadvantages of the Capture and Process paradigm, compared to conventional "real-time" GPS, is that it is not known at the time of capture of a grab whether the Signal-to-Noise Ratio (SNR) is high enough for a sufficient number of satellites to enable a position fix to be derived. A conventional GPS receiver may experience similar problems in acquiring satellite data signals, but will at least be aware of the loss of signal at the time it happens, since all processing is carried out "on-line". One way of mitigating the effects of low SNR is to process longer durations of the received signal. Unfortunately, for the Capture and Process receiver, the loss of signal will only be revealed afterwards, as the stored samples are processed - by which time the problem is impossible to remedy by capturing additional samples. As a result there is an inherent trade-off between, on the one hand, capturing a grab long enough to achieve the necessary robustness and, on the other, minimizing the time, power and storage overheads in capture. The parameters of the trigger (in this example, the flash and focus-distance) are therefore a valuable source of information with which to adapt the trade-off to a given set of circumstances.

Other camera parameters can be used for inference. Knowledge of the aperture, exposure time, light metering or brightness levels could equally be used to predict whether the photograph is being taken indoors or outdoors. Additionally, many modern cameras incorporate user-selectable modes such as "Indoors", "Outdoors", "Scenery", or "Portrait", which are used to optimize the camera capture parameters. These modes can be used as an even more direct source of contextual information when triggering GPS grabs.

As well as affecting the length of grab, camera parameters can be used to influence capture in other ways. For example, a GPS receiver integrated in a camera may incorporate diverse antennae, for improved reliability. In such a scenario, orientation info provided by the camera can be used to select one of the antennae, based on a knowledge of which antenna is likely to receive the strongest signal in that orientation.

In other applications, it may be appropriate to vary different parameters of the capture. For example, the sampling rate or bit resolution of the analogue to digital conversion 16 could be adapted, to provide variable robustness, power consumption, accuracy and resistance to jamming. As will be readily apparent to one skilled in the art, there are inherent design compromises between the parameters of sampling rate and resolution and those of grab length.

Likewise, in other applications different indicators will be relevant. For example, in a golf geo-tagging application, grabs may be triggered with each swing (possibly detected automatically by sensors in the golf club). Knowing that a golf stroke is highly likely to be an outdoor event, the length of the grab can be accordingly reduced.

When riding a bicycle, on the other hand, inference may depend on an estimate of the speed. Capture of a grab may be triggered by a fixed number of wheel rotations (note that this is inherently useful, since the rate of grab-capture is automatically adapted to the speed of travel); by also measuring the time taken between triggers, a rough estimate of average speed can be derived. Higher speed may imply an open area having better satellite reception, mandating a shorter grab, while low speeds may imply congestion, poor satellite reception and a correspondingly longer grab (this could apply equally off-road, for example in dense forest with natural obstacles, as well as in dense urban environments). Note that speed can still be used to control the parameters of the recording even if the triggering is not linked to a fixed distance travelled. For example, an increase in the frequency of timed captures could be increased in response to a trigger indication of increased speed.

Preferably, the parameters of the trigger signal may be stored along with each IF grab. In many applications, it will be inherently useful to record additional information when capturing a grab - for example, in the golfing scenario highlighted above, it will be of interest for the golfer to record the club used for a particular stroke. Furthermore, such recorded parameters can later be used to adapt a post-processing method processing the samples. The parameters stored may be the same as those used to influence the capture process, or may be different.

A second aspect of the invention will now be described, in which recorded parameters of the trigger are used to optimize the processing of each grab following upload from the receiver.

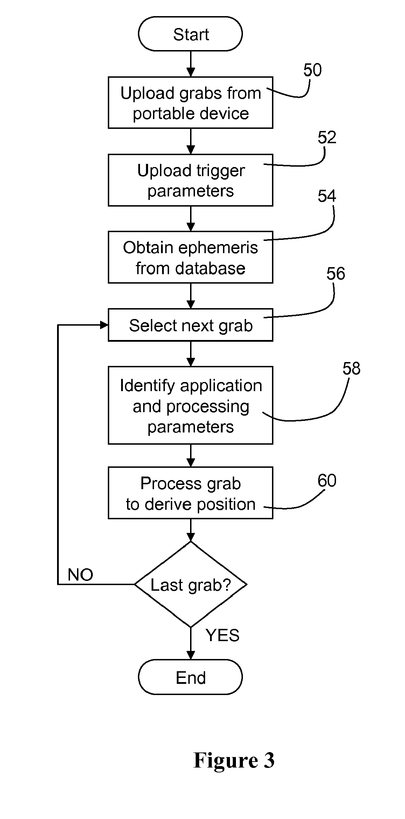

Figure 3 shows a processing method according to an embodiment of the invention. This may be implemented, for example, by a personal computer processing the recorded IF grabs.

At step 50, the recorded grabs are uploaded from the receiver 5 and at step 52, the recorded triggers, including detailed parameter information, are uploaded. Each upload operation may utilise any communication link available, including wired, wireless or infrared links. Typically, the link will be common to both steps 50 and 52.

At step 54 the computer obtains ephemeris data for the GPS satellites from a database, such as one accessible over the internet. The availability of full ephemeris data from a separate source (other than the recorded IF grabs) brings a number of benefits. It can enable position estimates to be derived from grabs of minimal length, or enable the computer to do so with minimal processing effort (as described in greater detail below).

The computer then iterates over the uploaded grabs and associated triggers, selecting a grab at step 56 and identifying at step 58 the most appropriate software application to launch and/or the most appropriate computational strategy to derive a position fix, based on the parameters of the uploaded trigger. At step 60, the grab is processed as determined at step 58 and the selected application launched.

For each grab, processing at step 60 determines a position estimate. This processing will be well-known to those skilled in the art. It essentially involves a search of the IF samples for the signals of as many SVs as possible, followed by estimation of the time of flight of those signals and trilateration to derive a position. At this stage, the downloaded ephemeris data can be used to guide the search. For example, knowing the time of capture of the grab and the positions over time of each SV, only certain SVs would be visible to a receiver in a given position. Thus, once a signal corresponding one of the SVs is found, a number of other SVs which could not simultaneously be visible can be eliminated from the search.

Consecutive grabs may be processed consecutively. This allows the search to be further constrained, on the basis that consecutive grabs will represent nearby positions and times. For example, a SV-signal found in one grab is very likely to be present in the preceding and subsequent grabs in the sequence - the search can prioritise such SVs.

Refinement of the search strategy is one way in which the stored trigger parameters can enhance the processing. Returning to the digital camera application described above, a photograph may have been taken in "Night" mode, with a given time of capture (determined by the camera's internal clock). By making an assumption about the home time-zone of the camera user, the location of capture of the photograph (and hence the associated IF grab) can immediately be restricted to the part of the globe where it was night at the time of capture. This may then be used with the ephemeris data to deduce which satellite data signals could be present in the grab.

As well as inferring absolute estimates of location, the trigger information could also be used to make relative inferences. For example, the trigger could be associated with a distance measurement, such as a fixed number of rotations of a bicycle wheel. Such a distance-triggered grab can then be assumed to have been no more than the given fixed distance away from the previous (or subsequent) grab. This knowledge may even be used, in extreme cases, to derive a position fix for one grab in a longer sequence when satellite acquisition has failed for that grab. The locus of possible positions will be constrained by the intersection of two circles of fixed radius, centred on the grabs triggered immediately before and after the grab which has failed. Note that even if capture of the grab is not triggered directly by wheel rotations, the same result can nonetheless be achieved provided the number of rotations is recorded along with the grab.

Distance information can be derived from position sensors, as for the bicycle wheel sensor described above, and in some circumstances also from acceleration sensors. In the case of a running shoe, for example, an accelerometer can be used to trigger an IF grab after interval of a predefined number of footsteps. Since, over time, the average stride can be assumed to be roughly constant, the number of strides can be used to set a similar maximum distance radius when processing consecutive grabs to estimate positions.

In other scenarios, it may be appropriate to trigger a grab any time there is movement. Conversely, if no movement is detected between triggered grabs, then the processing can have high confidence that the consecutive samples relate to the same position.

Even if precise measurements of distance or velocity are unavailable, the mere knowledge that grabs were triggered in the context of a given activity can be useful in the subsequent processing of samples. For example, in the context of riding a bicycle or running, the time between grabs can be used together with general assumptions about the dynamics of the activity to derive coarse estimates of differential position.

The parameters of the trigger may also be combined with extrinsic information to make inferences. For example, in a golf geo-tagging application, grabs may be triggered with each stroke (this could be detected automatically, by sensors in the golf club). When the samples are later processed, extrinsic knowledge of the golf courses frequented by the user can be used as a starting point for the position estimation process. Once again, by reducing the initial ambiguity, precise position estimates can be calculated quickly and with grabs of minimum length.

As well as assisting in the derivation of position estimates, a method according to the current invention can assist in the selection of an appropriate software application to assimilate the derived GPS positions. Thus, when a grab has been triggered by a camera, a photo-geo-tagging application can be launched, potentially looking up a Geographic Information System (GIS) database to assign location names to the photographs. Similarly, for a golf-swing triggered grab, a program can be launched which analyses performance over the round, logs the golf clubs used (and related distances achieved) and automatically computes the score - even including par information for the course, as downloaded from a specialist GIS database.

The ability to select among software programs will be particularly beneficial when one Capture and Process GPS receiver is shared (that is, may be triggered) by multiple diverse sensors or devices. Thus, photos captured on the golf course can automatically be processed by photo-management software, while the golf-stroke data can be handled by golf software.

Notwithstanding the fact that different software may be appropriate, nearby grabs associated with diverse triggers can be cross-referenced, so as to best exploit the available information. For example, not only are photographs interspersed among golf strokes likely to have been captured on the golf course (enabling position boot-strapping, as described above), but the photographs can be semantically labelled to the category "golf' by the photo-management software. These are both examples of how a second, additional trigger can be used to further enhance processing of captured IF data, based on context. The first trigger (camera trigger) is associated with the photo itself and the additional trigger is associated with a golf-stroke. The triggers can be cross-referenced or linked based on their proximity in time. Processing of the data samples associated with the photo to derive a position can be bootstrapped with the knowledge that a golf-course is the likely venue. In the other example, the first trigger (camera trigger) is used to launch a photo-management software application, as before. The second (golf) trigger is then used to infer a context for the photograph, so that it is labelled or categorised by the software as a "golfing photo".

As described above, improved processing of the IF grabs based on knowledge of the associated triggers often consists of successively removing ambiguity to constrain the range of possible valid GPS position estimates. For completeness, suitable techniques for removing ambiguity will now be described in greater detail.

In order to distinguish a signal from a particular satellite, it is necessary to generate a replica of the C/A code known to be in use by that satellite and align it so that it is synchronized with the incoming signal, which will be delayed by an unknown amount predominantly due to the time of flight of the signal in travelling from the satellite to the receiver (typically around 0.07s). In general, it is not possible to accurately predict the alignment necessary to get the replica in sync with the incoming signal, so some form of search is required, with a number of alignments being tried in turn and the best match being selected. This process of evaluating a number of candidate alignments is commonly implemented as a correlation function between the received signal and the known C/A code for each satellite in turn, to determine if the received signal includes a component having the C/A code from a particular SV. The correlation function has to be calculated for multiple relative timings, and when the correlation peak is found, this corresponds to a particular timing and a particular SV. The discovered timing in turn corresponds to a particular distance from the SV.

The determined code phase, i.e. the timing of the peak of the correlation function, reveals the accurate timing information for use in the distance calculation. However, as the code is repeated every millisecond, the coarse timing also needs to be determined. Typically, in a conventional real-time receiver, less-frequently repeating data components are used for the more coarse timing evaluation (i.e. to enable GPS time to be derived), such as the individual bits of the 50bps data message and specific parts of it such as the subframe preamble or subframe handover word.

The integration period over which the correlation function is performed determines how easily a signal encoded with a particular code can be identified; in general, the longer the integration period, the more reliably the correct code phase should be reported for a given signal strength. The weaker the signal to be detected, the longer the integration period needs to be to achieve the same level of reliability.

A short grab can enable a code phase measurement to be obtained. However, a code phase measurement alone is ambiguous (as noted above) - it indicates what fraction of a ms the delay is but not the integer number of ms. Thus, a single grab of e.g. 100ms of IF data does not by itself contain enough information to calculate an unambiguous position

An approximate position (or time) can be used to give better results more efficiently. For example, given a single grab with no other information, a search for all 32 SVs over every possible code phase and carrier frequency is likely to be necessary. The size of the carrier frequency range that needs to be searched is driven by the quality of the oscillator in the GPS front end (an oscillator with a 1 ppm error leads to a 1.5kHz error in the IF for a L1 signal) and the possible Doppler shifts on the signals (SVs observed from the surface of the Earth normally have Doppler shifts in the range +/- 4kHz, and receiver motion can increase this).

A position estimate can reduce the processing required for the position fixes. In particular, an approximate knowledge of position can be used to overcome the timing ambiguity of the code phase measurement discussed above. As radio signals travel approximately 300km in 1ms, knowing position to within a 150km radius means that there should be no ambiguity at all. Even if a position estimate is not within this 150km accuracy, it can still help with the processing of signals, in that it is still possible to determine the SVs that are within view. This means that the correlation calculations can be cut down.

It is known that a position estimate can be derived from the apparent Doppler shifts of the SV signals. While this is not accurate, it does not suffer from the ambiguity problem associated with time-of-flight estimation. Thus, an approximate position fix using Doppler shift can be used to remove the ambiguity in the pseudo-range measurements and in turn derive the accurate position.

Likewise, a time estimate can be used to directly eliminate the timing ambiguity.

If a number of grabs recorded at similar times by the same device are to be processed, then the detection of a SV in one grab makes it likely that the same SV is detectable in the other grabs. Furthermore, once it is known that one SV that is present, any SVs known to be on the other side of the Earth can be excluded. Furthermore, as the carrier frequency of a given SV changes fairly slowly, knowing the carrier frequency in one grab can be used to predict the carrier frequency in a temporally close grab, potentially restricting the size of the frequency search to be done. Finally, depending on how accurately the time difference between grabs can be determined, the position in the data message can be predicted, the position of bit edges or even the code phase from one grab; all information that makes search easier and/or more reliable.

As explained above, in order to establish a position/velocity fix, it is necessary to obtain the precise orbital parameters of the SVs and the errors in their on-board clocks; which is conveyed by the ephemeris data. These are broadcast by the SVs as part of the normal data message, repeated every 30s. Whilst it is theoretically possible to extract such data from lots of short IF grabs, in practice it is much more effective to have one or more reference stations collect the data and populate a database that can be accessed by any PC that wants to process a grab.

The invention also relies on the ability to infer respective parameters for the capture and processing of grabs from the parameters of the trigger. These may be rule-based (as in the examples given in the description above), or they may be based on more advanced statistical inference methods. Appropriate inference methods will be readily apparent to the skilled person.

The invention has been described in connection with (single frequency) GPS, but other GNSS systems (GLONASS, Galileo etc) would be similar. Indeed the techniques could also be applied to multiple frequency systems.

GPS transmits at several different frequencies. At present only a single frequency is of interest to civilian users, but plans for other publically available frequencies are well advanced and will be covered by Galileo for example. Capture and Process receivers can handle this by:
a) Capturing each frequency separately in parallel (using multiple RF front ends or a single RF front end with multiple parallel signal paths)
b) Capturing each frequency separately in serial (needing only a single front end which can be switched/programmed to move between the chosen frequencies - for example, with different bandwidths and filter settings)
c) Capturing all frequencies together, by using a front-end that mixes all the frequencies down to generate a single output with the different frequencies in the same IF signal, offset by much smaller amounts than when they were transmitted.

GLONASS uses slightly different transmission frequencies for different satellites. A Store & Process receiver for GLONASS could be implemented, for example, by capturing the whole bandwidth with a higher sampling rate.

An example is given above of storing parameters relating to the trigger, in the form of the golf club used. More generally, an aspect of the invention relates to the provision of such additional data with a captured image, so that images can be processed or sorted using the additional data. This additional data can relate directly to the trigger (as in the example of the golf club used, as the golf swing forms the trigger), but it can also relate to other time-related parameters which do not directly relate to the trigger. An example of this is the temperature. This enables images to be sorted by temperature, for example as a way of sorting images by weather conditions.

Ambient pressure (from a barometer) may also be recorded with images as an alternative way of sorting images by weather conditions.

It is known to record parameters relating to the operating conditions of the camera with the captured image, such as the time, lens setting, camera flash setting, camera model, image size etc. This aspect of the invention records additional information relating to external parameters in the vicinity of the camera, but which are not derived from the camera settings, and which are therefore independent of the camera configuration.

For the example of temperature, a dedicated temperature sensor may not be required - instead, the temperature can be derived from operating conditions of a temperature-dependent circuit component within the camera, for example a voltage-controlled oscillator. The additional information can be used for displaying or sorting the images.

Various other modifications will be apparent to those skilled in the art.

The following aspects are disclosed:
1. A method of processing signals from a satellite positioning system, using a processing method dependent on one or more parameters of a first trigger signal in addition to its timing.
2. The method of aspect 1, wherein the processing comprises processing a block of data samples of a satellite broadcast, using a processing method dependent on the one or more parameters, to derive at least position information.
3. The method of aspect 2 comprising, before the step of processing the block:
   receiving the block from a portable device at which it was recorded; and
   receiving the one or more parameters of the first trigger signal .
4. The method of aspect 3, further comprising processing the recorded block using one or more parameters of a second trigger signal.
5. The method of aspect 3 or aspect 4, wherein the processing of the recorded block comprises launching a software application in dependence upon the parameters of the first trigger signal.
6. The method of any of aspects 3 to 5, wherein the processing of the recorded block comprises using the parameters of the first trigger signal to simplify the derivation of the position information.
7. The method of aspect 1, wherein the processing comprises recording , in response to the trigger signal, a block of data samples of a satellite broadcast, at least one parameter of the recording depending on the one or more parameters of the trigger signal.
8. The method of aspect 7, further comprising providing the recorded blocks of data samples to a processor to derive at least position information.
9. The method of aspect 7 or aspect 8, wherein the at least one parameter of the recording is a number of data samples recorded.
10. The method of any preceding aspect, wherein the one or more parameters of the first trigger signal comprise at least one of: information identifying a source device of the trigger; and parameters of the source device of the trigger.
11. The method of aspect 10, wherein the source device is a camera and the parameters of the source device comprise at least one of: information identifying whether a flash has been fired; an aperture value; a focal length value; a zoom value; a light-level value; an exposure time; a subject distance; information identifying orientation; and information identifying scene type.
12. The method of aspect 10 or aspect 11, wherein the source device comprises at least one of: a motion sensor; an acceleration sensor; and an orientation sensor.
13. The method of any preceding aspect, wherein the one or more parameters of the trigger signal comprise at least one of: a distance measurement; an acceleration measurement; a number of footsteps; and a number of revolutions of a wheel.
14. The method of aspect 8 or aspect 9, further comprising:
   recording parameters of the first trigger signal; and
   providing the recorded parameters to the processor.
15. A method according to aspect 14, further comprising processing the recorded blocks of data samples using a method according to any one of aspects 3 to 6.
16. A computer program comprising computer program code means adapted to perform all the steps of any of aspects 1 to 15 when said program is run on a computer.
17. A computer program according to aspect 16 embodied on a computer-readable medium.
18. Apparatus for processing signals from a satellite positioning system, comprising processing means adapted to process the signals using a processing method dependent on one or more parameters of a first trigger signal in addition to its timing.
19. The apparatus of aspect 18, wherein the processing means is a processor, adapted to process a block of data samples of a satellite broadcast, using a processing method dependent on the one or more parameters, to derive at least position information.
20. The apparatus of aspect 19, further comprising:
   first receiving means, adapted to receive the block of data samples from a portable device at which it was recorded;
   second receiving means, adapted to receive the one or more parameters of the first trigger signal.
21. The apparatus of aspect 18, wherein the processing means are recording means adapted to record, in response to the trigger signal, a block of data samples of a satellite broadcast, at least one parameter of the recording depending on the one or more parameters of the trigger signal.
22. The apparatus of aspect 21, further comprising recording means adapted to record parameters of the trigger signal.

## Claims

1. A method of recording signals from a satellite positioning system,
comprising recording, in response to a trigger signal, a block of data samples of a satellite broadcast, at least one parameter of the recording depending on one or more parameters of the trigger signal,
wherein the source of the trigger signal is a camera and the parameters of the trigger signal comprise at least one of: information identifying whether a flash has been fired; an aperture value; a focal length value; a zoom value; a light-level value; an exposure time; a subject distance; information identifying orientation; and information identifying scene type.

2. The method of claim 1, wherein the at least one parameter of the recording is a number of data samples recorded.

3. The method of claim 1 or claim 2, further comprising providing the recorded block of data samples to a processor to derive position information.

4. The method of claim 3, further comprising:
recording parameters of the trigger signal; and
providing the recorded parameters to the processor.

5. The method of claim 4, further comprising processing the block of data samples, using a processing method dependent on the one or more parameters of the trigger signal, to derive position information.

6. The method of claim 5, wherein the processing of the recorded block comprises using the parameters of the trigger signal to simplify the derivation of the position information.

7. The method of any preceding claim, wherein the camera comprises at least one of: a motion sensor; an acceleration sensor; and an orientation sensor.

8. A computer program comprising computer program code means adapted to perform all the steps of any of claims 1 to 7 when said program is run on a computer.

9. A computer program as claimed in claim 8 embodied on a computer-readable medium.

10. Apparatus for recording signals from a satellite positioning system, comprising recording means adapted to record, in response to a trigger signal, a block of data samples of a satellite broadcast, at least one parameter of the recording depending on one or more parameters of the trigger signal,
wherein the source of the trigger signal is a camera and the parameters of the trigger signal comprise at least one of: information identifying whether a flash has been fired; an aperture value; a focal length value; a zoom value; a light-level value; an exposure time; a subject distance; information identifying orientation; and information identifying scene type.

11. The apparatus of claim 10, further comprising second recording means adapted to record parameters of the trigger signal.
